(19) **Europäisches Patentamt / European Patent Office / Office européen des brevets**

(11) **EP 1 804 388 B1**

(12) **EUROPEAN PATENT SPECIFICATION**

(45) Date of publication and mention of the grant of the patent:
**13.04.2016 Bulletin 2016/15**

(21) Application number: **05759958.1**

(22) Date of filing: **12.07.2005**

(51) Int Cl.:
*H04B 1/16* (2006.01)   *H04N 5/44* (2006.01)
*H04N 5/46* (2006.01)

(86) International application number:
**PCT/JP2005/012861**

(87) International publication number:
**WO 2006/040862 (20.04.2006 Gazette 2006/16)**

(54) **DIGITAL BROADCAST RECEPTION DEVICE**

DIGITALE BROADCAST-EMPFANGSEINRICHTUNG

DISPOSITIF DE RECEPTION DE DIFFUSION NUMERIQUE

(84) Designated Contracting States:
**DE**

(30) Priority: **14.10.2004 JP 2004300424**

(43) Date of publication of application:
**04.07.2007 Bulletin 2007/27**

(73) Proprietor: **MITSUBISHI DENKI KABUSHIKI KAISHA**
**Chiyoda-ku**
**Tokyo 100-8310 (JP)**

(72) Inventors:
• **TAURA, Kenichi**
**Tokyo 100-8310 (JP)**
• **ISHIDA, Masayuki**
**Tokyo 100-8310 (JP)**
• **OKUMURA, Nobuyoshi**
**Tokyo 100-8310 (JP)**

• **OHKUBO, Tadatoshi**
**Tokyo 100-8310 (JP)**

(74) Representative: **Hoffmann Eitle**
**Patent- und Rechtsanwälte PartmbB**
**Arabellastraße 30**
**81925 München (DE)**

(56) References cited:
**JP-A- 5 347 736      JP-A- 7 007 678**
**JP-A- 7 212 800      JP-A- 8 009 276**
**JP-A- 9 130 697      JP-A- 10 190 499**
**JP-A- 11 261 913     JP-A- 2001 285 752**
**JP-A- 2003 234 975   US-A1- 2003 189 893**

• **DATABASE INSPEC [Online] THE INSTITUTION OF ELECTRICAL ENGINEERS, STEVENAGE, GB; June 1993 (1993-06), SGRIGNOLI G: "Measuring peak/average power ratio of the Zenith/AT&T DSC-HDTV signal with a vector signal analyzer", XP002622841, Database accession no. 4469390**

**Description**

TECHNICAL FIELD

The present invention relates to a digital broadcasting receiving apparatus, and particularly to a digital broadcasting receiving apparatus preferably applicable to a case where an analog broadcasting signal and a digital broadcasting signal are mixed together in the same broadcasting frequency band.

BACKGROUND ART

Recently, terrestrial digital broadcasting has been gradually introduced. Thus, a transitional condition develops in which analog broadcasting signals and digital broadcasting signals coexist in the same broadcasting frequency band during the transition from the existing analog broadcasting to the digital broadcasting. Accordingly, it is necessary for a digital broadcasting receiving apparatus to capture and receive the digital broadcasting signal quickly by speedily discriminating between the analog broadcasting signal and digital broadcasting signal.

To cope with this conventionally, when a receiving apparatus receives an analog broadcasting signal by sequentially searching for broadcasting channels to search for a received station (station to be received), the receiving apparatus makes a decision as to whether the received signal can undergo sync AFC processing or not according to the presence or absence of the detection of the transmission mode that includes information about scrambling procedure and about the content of the error correcting code at the broadcasting side. Since it is an analog broadcasting signal originally, the transmission mode cannot be detected, and hence the next channel search is started. As a result, sync detection waiting time that is set in the course of this is wasted (see Patent Documents 1 and 2, for example).

Patent Document 1: Japanese patent application laid-open No. 2001-285032; and
Patent Document 2: Japanese patent application laid-open No. 2004-88162.

Thus, when carrying out the received station search, the conventional digital broadcasting receiving apparatus takes considerable time to make a decision that the analog broadcasting signal in the broadcasting band is unreceivable. This presents a problem of impairing usability from a standpoint of a user because of unnecessary prolongation of the operation.

JP 2003 234975 A relates to a broadcast signal discriminator, aiming at quickly discriminating between broadcast signals with analogue broad waves and those with digital broadcast waves received in a channel during the simultaneous broadcast time period. A tuner 12 tunes in the channel specified by a channel search signal and a channel selection output is supplied to a variable filter 13. The signal which passed this variable filter 13 is supplied to a power measurement machine 14. The power measurement machine 14 measures the electric power within the zone which passed the variable filter 13 according to frequency, and that measurement result is supplied to the decision processing part 15. The decision processing part 15 coordinates with the control section 16. A power peak value P2 and a power value P1 of the entire band are measured to compare the difference P3 between the peak value P2 and the total power value P1 with a reference value Pref. As a result, it is determined that analogue broadcast waves or digital broadcast waves are received.

The present invention is implemented to solve the foregoing problem. Therefore it is an object of the present invention to provide a low cost digital broadcasting receiving apparatus capable of improving the usability and convenience of a user by reducing time necessary for making a decision that the analog broadcasting signal or unwanted interference signal existing in a broadcasting band is unreceivable when carrying out the received station search.

DISCLOSURE OF THE INVENTION

A digital broadcasting receiving apparatus in accordance with the present invention as defined in the claims includes: spectrum analyzing means for analyzing a spectrum of a received signal; spectrum distribution analyzing means for analyzing a distribution profile of the spectrum of the received signal from an output of the spectrum analyzing means; and tuning search control means for carrying out tuning by making a decision as to whether the signal during receiving is a digital broadcasting signal or not in response to an output of the spectrum distribution analyzing means.

According to the present invention, it is possible for the received station search to reduce the time taken to make a decision that they are unreceivable as to the analog broadcasting or unwanted interference signal in the broadcasting band, thereby being able to improve the usability and convenience of the receiving apparatus for the user.

BRIEF DESCRIPTION OF THE DRAWINGS

FIG. 1 is a block diagram showing a configuration of a digital broadcasting receiving apparatus of an embodiment 1 in accordance with the present invention;

FIG. 2 is a block diagram showing a configuration of a major portion of the digital broadcasting receiving apparatus of the embodiment 1 in accordance with the present invention;

FIG. 3 is a flowchart illustrating operation of the digital broadcasting receiving apparatus of the embodiment 1 in accordance with the present invention;

FIG. 4 is a diagram used for explaining the operation of the digital broadcasting receiving apparatus of the embodiment 1 in accordance with the present invention;

FIG. 5 is a diagram used for explaining the operation of the digital broadcasting receiving apparatus of the embodiment 1 in accordance with the present invention;

FIG. 6 is a block diagram showing a configuration of a digital broadcasting receiving apparatus of an embodiment 2 in accordance with the present invention; and

FIG. 7 is a diagram used for explaining the operation of the digital broadcasting receiving apparatus of the embodiment 2 in accordance with the present invention.

BEST MODE FOR CARRYING OUT THE INVENTION

The best mode for carrying out the invention will now be described with reference to the accompanying drawings to explain the present invention in more detail.

EMBODIMENT 1

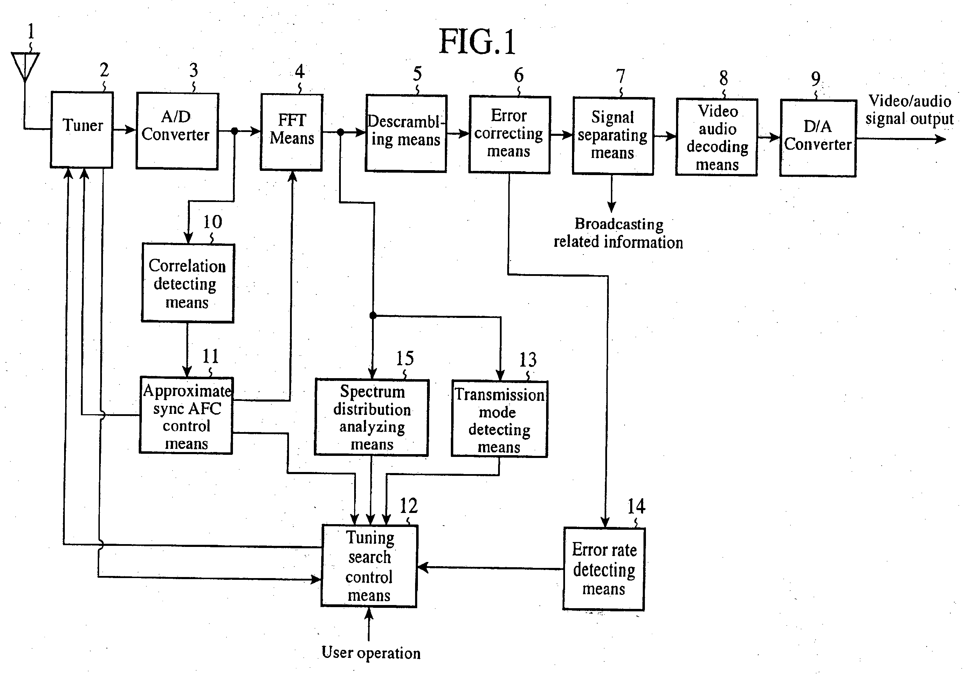

FIG. 1 is a block diagram showing a configuration of a digital broadcasting receiving apparatus of an embodiment 1 in accordance with the present invention.

In FIG. 1, the digital broadcasting receiving apparatus includes an antenna 1 for receiving radio waves in a broadcasting frequency band as electric signals; a tuner 2 for selecting and amplifying a specified broadcasting wave from the signals fed from the antenna 1 by receiving instructions from a tuning search control means 12 which will be described later in response to an operation or the like of a user, and at the same time for converting the selected broadcasting wave to a specified frequency through a superheterodyne or orthogonal demodulation method, followed by outputting it; an A/D converter 3 for converting the analog signal output from the tuner 2 to a digital signal to be output; and a fast Fourier transform means (called "FFT means" from now on) 4 for converting the frequency division multiplexed signal to a plurality of data representing the amplitude and phase of individual carrier waves by applying the fast Fourier transform to the digital broadcasting wave signal, which is transmitted after passing through the orthogonal frequency division multiplexing modulation (OFDM) and is fed from the A/D converter 3. Here, in the present embodiment, the FFT means 4 for demodulating the broadcasting signal is used in common as a spectrum analyzing means as will be described later.

In addition, the digital broadcasting receiving apparatus includes a descrambling means 5 for restoring, according to a reverse procedure at the time of transmission, the original data sequence of the output data from the FFT means 4, which output data undergo the systematic changes of the sequences between the individual carrier waves and between a plurality of OFDM symbols according to a specific procedure at the time of transmission; an error correcting means 6 for decoding the broadcasting data fed from the descrambling means 5 in the form of error correcting code to the broadcasting data while correcting data errors that can occur on a transmission line by applying the error correcting processing; a signal separating means 7 for reconstructing a series of signals with the same contents by separating information items from the time division multiplexed broadcasting signals obtained by dividing the video signal, audio signal and supplementary information fed from the error correcting means 6 into packet formats with rather short duration; a video audio decoding means 8 for decoding the video signal and audio signal, which are output from the signal separating means 7 in the reconstructed form, to a time-series sampled signal (PCM signal) by releasing the compression of the video signal and audio signal; and a D/A converter 9 for converting the digital video and audio signals output from the video audio decoding means 8 to analog video and audio signals presentable to a user through a display monitor unit and speaker (not shown).

Furthermore, the digital broadcasting receiving apparatus includes a correlation detecting means 10 for detecting correlation peak timing for the present receiving channel fed from the A/D converter 3; an approximate sync AFC control means 11 for supplying a tuning search control means 12 with information as to whether the received signal is a digital broadcasting wave or not by controlling the input data window timing of the FFT means 4 in response to the correlation peak timing detected by the correlation detecting means 10, by correcting the tuner 2 by making estimation of the effect of the frequency detuning on the correlation output, and by making a decision that the correlation peaks appear at certain intervals; a transmission mode detecting means 13 for supplying the tuning search control means 12 with information about the procedure of the scrambling at the broadcasting side and about the error correcting code in response to the output data from the FFT means 4; and an error rate detecting means 14 for supplying the tuning search control means 12 with information as to whether the received signal can present visible and audible video and audio data without problems by detecting the frequency of the errors in the received signal output from the error correcting means 6.

Moreover, the digital broadcasting receiving apparatus includes between the FFT means 4 and the tuning search control means 12 a spectrum distribution analyzing means 15 for analyzing the profile of the spectrum distribution by receiving the output of the FFT means 4 that substantially operates as a spectrum analyzing means of the broadcasting signal.

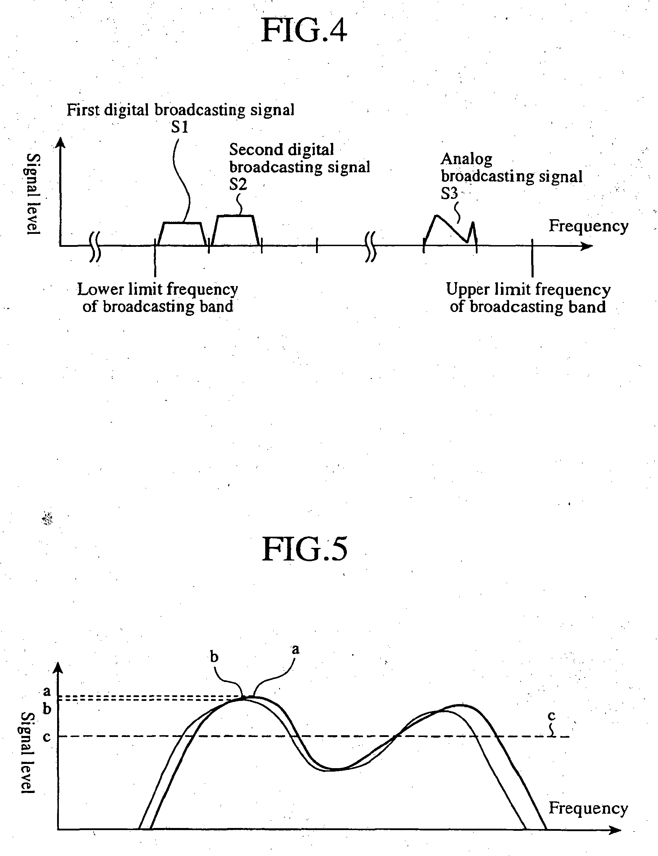

Here, as illustrated in FIG. 4, for example, as for the digital broadcasting signal transmitted through the orthogonal frequency division multiplexing, it is known that a first digital broadcasting signal S1 and a second digital broadcasting signal S2 have a trapezoidal shape with substantially uniform spectrum distribution. On the other hand, as for the analog TV broadcasting signal, it is known that an analog broadcasting signal S3 has such spectrum distribution as having peaks at the video carrier wave and audio carrier wave. In addition, as for the spectrum distribution of interference waves that are generated from other digital apparatuses and from an electric circuit of its own, and fall on the broadcasting band, it usually has a profile of approximately a line spectrum whose much power concentrates in a rather narrow frequency range.

Thus, the spectrum distribution analyzing means 15 can be constructed in such a manner that it detects whether a rather large peak of the spectrum is present in the broadcasting band or not. The tuning search control means 12 can make a decision as to whether the received signal is that of the digital broadcasting or other signals such as of the analog TV broadcasting or interference waves from the output of the spectrum distribution analyzing means 15.

When the FFT means 4 carries out N-point complex FFT processing, its output OUT1 is given by the following expression.

$$OUT1 = An + j \cdot Bn \quad (\text{where } n = 0 - N-1) \qquad (1)$$

The processing of the spectrum distribution analyzing means 15 can be considered as an operation of obtaining the numerical value C given by the following expression.

$$C = N \times MAX(An^2 + Bn^2) / \sum_{n=0}^{N-1} (An^2 + Bn^2)$$
$$(\text{where } n = 0 - N-1) \qquad (2)$$

In this case, the numerical value C represents the ratio of the maximum of the square values of the amplitude of the spectrum analyzed, that is, $MAX(An^2 + Bn^2)$, to the average value of the square values of the amplitude of the spectrum contained in the entire analysis band, that is, $\sum_{n=0}^{N-1}(An^2 + Bn^2)/N$, and serves as an index representing the relative magnitude of the peak contained in the analysis band.

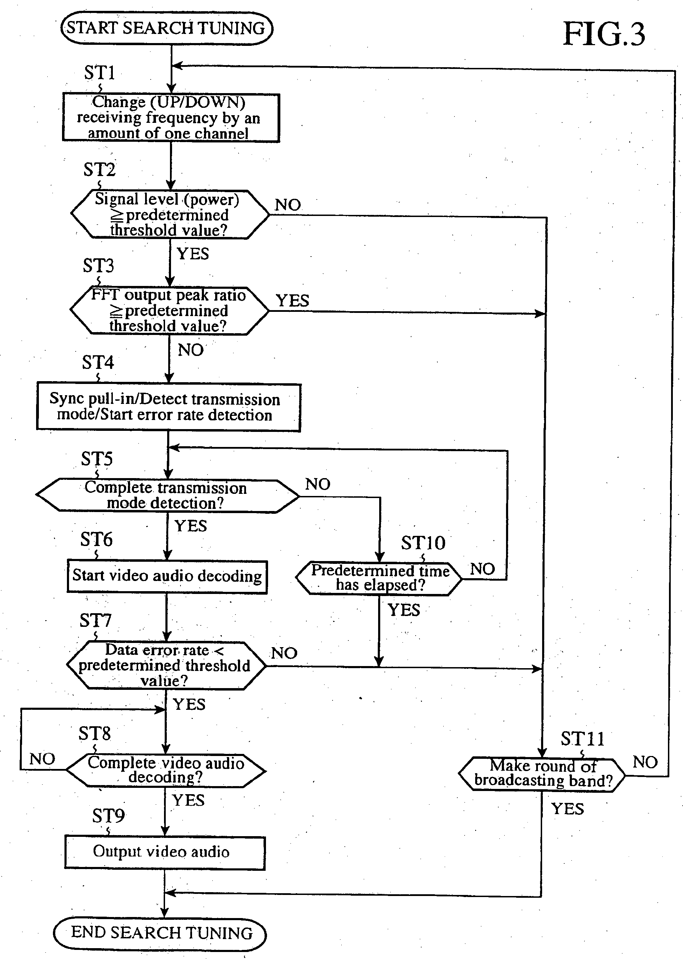

Thus, when the numerical value of the peak ratio fed from the spectrum distribution analyzing means 15 is smaller than a predetermined threshold value, a decision is made that it is the digital broadcasting. On the contrary, when the numerical value is greater than the predetermined threshold value, a decision is made that it is other signals such as an analog TV broadcasting signal or interference waves. In this connection, it can be said from FIG. 4 that the peak ratio is nearly one for the first and second digital broadcasting signals S1 and S2, and that it is nearly three for the analog broadcasting signal S3. Accordingly, the predetermined threshold value (the known threshold value of FIG. 3) for making a decision of the digital broadcasting or analog TV broadcasting is set considering these factors.

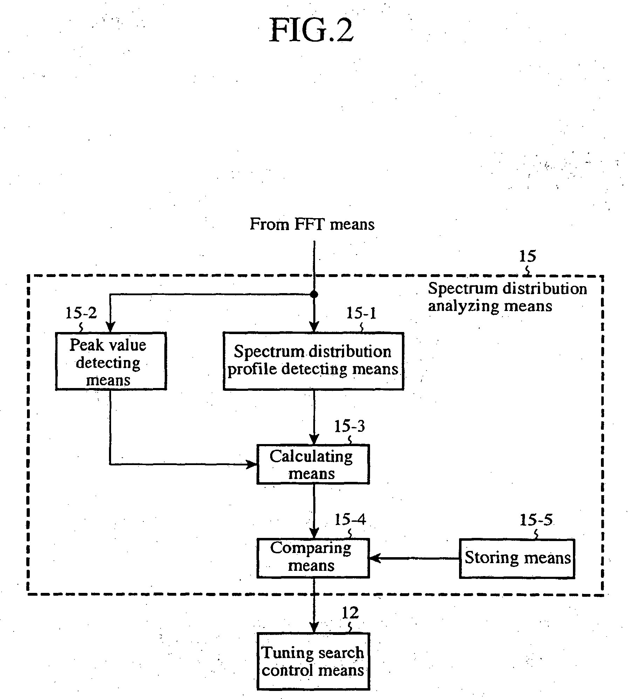

FIG. 2 is a block diagram showing a concrete circuit configuration of the spectrum distribution analyzing means 15.

In FIG. 2, the spectrum distribution analyzing means 15 includes a peak value detecting means 15-2 for detecting a peak value of the output of the FFT means 4, that is, for detecting as to whether a rather large spectrum peak is present in the broadcasting band; a spectrum distribution profile detecting means 15-1 for detecting the average value of the input signal output from the FFT means 4; a calculating means 15-3 for obtaining the peak ratio from the peak value fed from the peak value detecting means 15-2 and the average value fed from the spectrum distribution profile detecting means 15-1; and a comparing means 15-4 for comparing the peak ratio fed from the calculating means 15-3 with the predetermined threshold value stored in a storing means 15-5 in advance, and for supplying the comparing result to the tuning search control means 12 at the next stage.

FIG. 5 illustrates operation waveforms when the spectrum distribution analyzing means 15 analyzes the ratio between the spectrum peak value contained in the broadcasting band and the spectrum average value over the entire broadcasting band.

In FIG. 5, the symbols a and b denote the peak values of the spectra contained in the broadcasting band, and the symbol c denotes the average value of the spectrum over the entire broadcasting band.

Next, the operation will be described with reference to FIG. 3.

First, when the search tuning operation is started in response to the operation of a user, the tuning search control means 12 increments or decrements the tuning frequency of the tuner 2 by an amount of one channel (step ST1).

Subsequently, reading the received signal level fed from the tuner 2, the tuning search control means 12 compares the received signal level (power) with the predetermined threshold value (step ST2), and proceeds to step ST3 when the received signal level exceeds the predetermined threshold value, or to step ST11 otherwise. At step ST11, a decision is made as to whether the received station search operation (search tuning) has already completed the search of all the channels in the broadcasting band, that is, whether it makes a round of the broadcasting band, and terminates the received station search operation when the round search of the broadcasting band has been completed. On the other hand, unless it has completed the round of the broadcasting band, the processing is returned to step ST1 to change the frequency by an amount of one channel, and continues the search operation of the received station.

At step ST3, a decision is made as to whether the output of the spectrum distribution analyzing means 15, that is, the ratio of the peak in the spectrum distribution or the ratio of the peak in the output of the FFT means 4, exceeds the predetermined threshold value (fixed threshold value). As a result, when the output from the spectrum distribution analyzing means 15 exceeds the fixed threshold value, the processing proceeds to step ST11 considering that the present received signal is not that of the digital broadcasting. Unless the round of the broadcasting band has been completed, the processing returns to step ST1 to search for the next channel, and if the round of the broadcasting band has been completed, the received station search operation is completed.

On the other hand, when the output from the spectrum distribution analyzing means 15 is smaller than the fixed threshold value at step ST3, the processing proceeds to step ST4 to start the approximate sync AFC operation by the approximate sync AFC control means 11 in response to the operation of the correlation detecting means 10 for the present receiving channel.

Subsequently, the sync AFC operation for the broadcasting signal is carried out, followed by making a decision as to whether the transmission mode detecting means 13 detects the transmission mode of the received signal correctly or not (step ST5). When the detection of the transmission mode is confirmed, the processing proceeds to step ST6. In contrast, when the transmission mode is not detected, the time taken by the transmission mode detection is decided at step ST10. If the time exceeds a predetermined value, a decision is made that the signal of the channel is unreceivable, and the processing proceeds to step ST11. Unless the round of the broadcasting band has been completed, the next channel search is carried out, and if the round of the broadcasting band has been completed, the received station search operation is completed.

When the detection of the transmission mode is detected, the signal separating means 7 separates the video audio signals in response to the supplementary information separated by the separating signal separating means 7, and the video audio decoding means 8 starts the expansion operation of the video audio at step ST6. At the next step ST7, a decision is made as to the information about the data error rate fed from the error rate detecting means 14. If the error rate is greater than the predetermined value, the processing proceeds to step ST11. Unless the round search of the broadcasting band has been completed, the received station search operation is continued, and if the round search has been completed, the received station search operation is completed.

At step ST7, when the error rate fed from the error rate detecting means 14 is smaller than the predetermined value, the processing at step ST8 waits for the completion of the decoding operation of the video and audio signals by the video audio decoding means 8, and the D/A converter 9 carries out the video audio output at step ST9, followed by completing the received station search operation.

As described above, the present embodiment can make a decision as to whether the received signal is that of the digital broadcasting or not without waiting for the decision as to the presence or absence of the detection of the transmission mode, which takes a lot of time. Accordingly, it is possible for the received station search to reduce the time taken to make a decision that they are unreceivable as to the analog broadcasting or unwanted interference signal in the broadcasting band, thereby being able to improve the usability and convenience of the receiving apparatus for the user.

In addition, the present embodiment can reduce the cost by using in common the spectrum analyzing means and one of the receiving circuit means, that is, the FFT means in this case.

Furthermore, employing the spectrum distribution analyzing means for analyzing the distribution profile of the spectrum of the received signal enables appropriate discrimination of the type of the broadcasting, thereby being able to contribute to the improvement of the broadcasting selecting capability.

Although the foregoing description is made by way of example in which the FFT means for demodulating the orthogonal frequency division multiplexed modulation signal of the broadcasting is used as the spectrum analyzing means, it can be installed independently for exclusive use.

EMBODIMENT 2

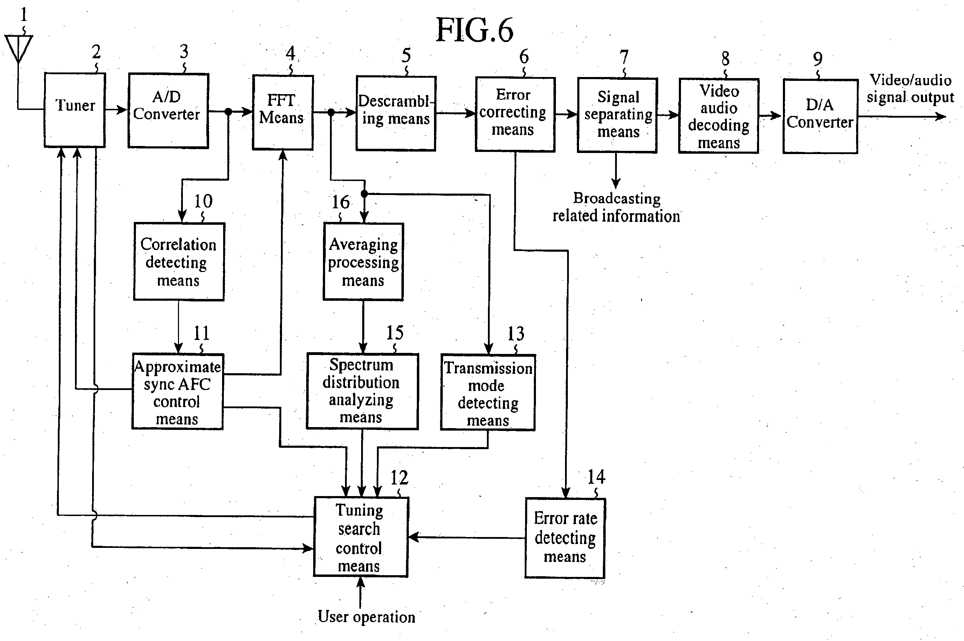

FIG. 6 is a block diagram showing a configuration of a digital broadcasting receiving apparatus of an embodiment 2 in accordance with the present invention.

In the present embodiment, an averaging processing means 16 is provided between the FFT means 4 and the spectrum distribution analyzing means 15 for averaging for each frequency component the output of the FFT means 4 serving as the spectrum analyzing means. Since the remaining configuration is the same as that of FIG. 1, the description thereof is omitted here.

When the FFT means 4 carries out N-point complex FFT processing, its output OUT2 is given by the following expression.

$$OUT2 = Amn + j \cdot Bmn$$
$$(\text{where } m = 0 - M{-}1, \text{ and } n = 0 - N{-}1) \qquad (3)$$

where the subscripts m each represent the sequence in the time series of the plurality of outputs, and the subscripts n correspond to the frequency.

Therefore the averaging processing in the averaging processing means 16 can substantially be made such processing as is given by the following expression.

$$Dn = \sum_{m=0}^{M-1} (Amn^2 + Bmn^2)/M \qquad (4)$$

In connection with this, the processing in the spectrum distribution analyzing means 15 can be made such processing as is given by the following expression.

$$C = N \times MAX(Dn) / \sum_{n=0}^{N-1} Dn \qquad (5)$$

This makes it possible to interpret the output value C in the same manner as in the foregoing expression (2).

Although the values m of the foregoing expression (4), which are given as the time-series output of the FFT means 4, increase successively, obtaining the moving average of the latest set of M outputs makes it possible to cope with variations with time.

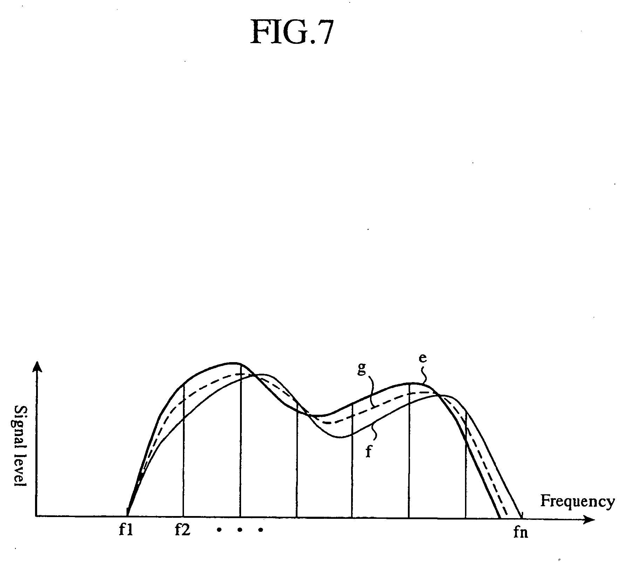

FIG. 7 is an operation waveform diagram when the averaging processing means 16 carries out averaging for each frequency for a plurality of outputs of the FFT means 4 serving as the spectrum analyzing means. In FIG. 7, symbols e and f each denote the characteristics of the signal levels for the frequency components at the individual frequencies f1 - fn, and the symbol g denotes the characteristics of the signal levels when averaging the individual frequency components of these two outputs, as an example.

As described above, the present embodiment can offer the same advantages as the foregoing embodiment 1. In addition, a configuration that includes the averaging processing means for averaging the output of the spectrum analyzing means for the individual frequency components, and supplies its output to the spectrum distribution analyzing means can circumvent the malfunction due to pulse noise, thereby being able to offer a higher performance digital broadcasting receiving apparatus free from a malfunction.

INDUSTRIAL APPLICABILITY

As described above, the digital broadcasting receiving apparatus in accordance with the present invention is suitable for improving the usability and convenience of the user by reducing the time taken to make an unreceivable decision in the received station search.

**Claims**

1. A digital broadcasting receiving apparatus comprising:

   spectrum analyzing means (4) for analyzing a spectrum of a received signal;
   spectrum distribution analyzing means (15) for analyzing a distribution profile of the spectrum of the received signal from an output of said spectrum analyzing means; and
   tuning search control means (12) for carrying out tuning by making a decision as to whether the signal during receiving is a digital broadcasting signal or not in response to an output of said spectrum distribution analyzing means,
   **characterized in that** said digital broadcasting receiving apparatus further comprises fast Fourier transform means (4) configured for demodulating a broadcasting signal transmitted in orthogonal frequency division multiplexing and also for being employed as said spectrum analyzing means (4).

2. The digital broadcasting receiving apparatus according to claim 1, wherein said spectrum distribution analyzing means (15) analyzes a ratio of a peak value of a spectrum in a broadcasting band to an average value of the spectrum over the entire broadcasting band.

3. The digital broadcasting receiving apparatus according to claim 1, further comprising averaging processing means (16) for averaging a plurality of outputs of said spectrum analyzing means (15) for individual frequency components.


**Patentansprüche**

1. Digitale Rundfunk-Empfangsvorrichtung, umfassend:

   ein Spektrum-Analysemittel (4) zum Analysieren eines Spektrums eines empfangenen Signals;
   ein Spektrumverteilung-Analysemittel (15) zum Analysieren eines Verteilungsprofils des Spektrums des empfangenen Signals aus einer Ausgabe des Spektrum-Analysemittels; und
   ein Abstimmsuch-Steuermittel (12) zum Durchführen eines Abstimmens durch Treffen einer Entscheidung, ob das Signal während eines Empfangens ein digitales Rundfunksignal ist oder nicht, als Reaktion auf eine Ausgabe des Spektrumverteilung-Analysemittels,
   **dadurch gekennzeichnet, dass** die digitale Rundfunk-Empfangsvorrichtung weiterhin ein Schnelle-Fouriertransformations-Mittel (4) umfasst, das eingerichtet ist, ein in einem orthogonalen Frequenzmultiplexen gesendetes Rundfunksignal zu demodulieren und auch als das Spektrum-Analysemittel (4) verwendet zu werden.

2. Digitale Rundfunk-Empfangsvorrichtung nach Anspruch 1, wobei das Spektrumverteilung-Analysemittel (15) ein Verhältnis eines Spitzenwerts eines Spektrums in einem Rundfunkband zu einem Mittelwert des Spektrums über das gesamte Rundfunkband analysiert.

3. Digitale Rundfunk-Empfangsvorrichtung nach Anspruch 1, weiterhin umfassend ein Mittelung-Verarbeitungsmittel (16) zum Mitteln einer Vielzahl von Ausgaben des Spektrum-Analysemittels (15) für individuelle Frequenzkomponenten.


**Revendications**

1. Récepteur de diffusion numérique comprenant :

   des moyens d'analyse de spectre (4) pour analyser le spectre d'un signal reçu ;
   des moyens d'analyse de distribution de spectre (15) pour analyser un profil de distribution du spectre du signal reçu d'une sortie desdits moyens d'analyse de spectre ; et
   des moyens de commande de recherche de réglage (12) pour réaliser un réglage en décidant si le signal pendant la réception est un signal de diffusion numérique ou pas en réponse à une sortie desdits moyens d'analyse de distribution de spectre,
   **caractérisé en ce que** ledit récepteur de diffusion numérique comprend en outre des moyens de transformation accélérée de Fourier (4) configurés pour démoduler un signal de diffusion transmis en multiplexage par division de fréquence orthogonale et également pour être employés comme dits moyens d'analyse de spectre (4).

**2.** Récepteur de diffusion numérique selon la revendication 1, dans lequel lesdits moyens d'analyse de distribution de spectre (15) analysent un rapport entre une valeur de pic d'un spectre dans une bande de diffusion et une valeur moyenne du spectre sur la bande de diffusion entière.

**3.** Récepteur de diffusion numérique selon la revendication 1, comprenant en outre des moyens de traitement de calcul de moyenne (16) pour calculer la moyenne d'une pluralité de sorties desdits moyens d'analyse de spectre (15) pour des composantes de fréquences individuelles.

# FIG.1

# FIG.2

From FFT means

15

Spectrum distribution
analyzing means

15-2

Peak value
detecting
means

15-1

Spectrum distribution
profile detecting means

15-3

Calculating
means

15-4

Comparing
means

15-5

Storing means

12

Tuning search
control means

# FIG.3

```
        ( START SEARCH TUNING )
                    │
   ST1              ▼
        ┌──────────────────────┐
        │   Change (UP/DOWN)    │
        │ receiving frequency by an │
        │  amount of one channel │
        └──────────────────────┘
                    │
   ST2              ▼
          ╱ Signal level (power) ╲      NO
         ⟨  ≧ predetermined       ⟩───────────►
          ╲  threshold value?    ╱
                    │ YES
   ST3              ▼
          ╱ FFT output peak ratio ╲     YES
         ⟨  ≧ predetermined        ⟩──────────►
          ╲  threshold value?     ╱
                    │ NO
   ST4              ▼
        ┌──────────────────────┐
        │ Sync pull-in/Detect transmission │
        │ mode/Start error rate detection │
        └──────────────────────┘
                    │
   ST5              ▼
          ╱ Complete transmission ╲     NO
         ⟨  mode detection?        ⟩──────────┐
          ╲                       ╱           │
                    │ YES                      ▼
   ST6              ▼                ST10  ╱ Predetermined time ╲  NO
        ┌──────────────────────┐        ⟨   has elapsed?       ⟩──►
        │ Start video audio decoding │     ╲                   ╱
        └──────────────────────┘              │ YES
                    │
   ST7              ▼
          ╱ Data error rate < ╲       NO
         ⟨ predetermined threshold ⟩────────────►
          ╲     value?        ╱
                    │ YES
   ST8              ▼                ST11  ╱ Make round of ╲  NO
     NO   ╱ Complete video audio ╲       ⟨ broadcasting band? ⟩──►
     ◄───⟨      decoding?         ⟩        ╲               ╱
          ╲                       ╱              │ YES
                    │ YES
   ST9              ▼
        ┌──────────────────────┐
        │   Output video audio   │
        └──────────────────────┘
                    │
                    ▼
        ( END SEARCH TUNING )
```

# FIG.4

First digital broadcasting signal
S1

Second digital
broadcasting signal
S2

Analog
broadcasting signal
S3

Signal level

Frequency

Lower limit frequency
of broadcasting band

Upper limit frequency
of broadcasting band

# FIG.5

b        a

a
b

c        c

Signal level

Frequency

## FIG.6

Video/audio signal output

Tuner 2 — A/D Converter 3 — FFT Means 4 — Descrambling means 5 — Error correcting means 6 — Signal separating means 7 — Video audio decoding means 8 — D/A Converter 9

Broadcasting related information

Correlation detecting means 10

Averaging processing means 16

Approximate sync AFC control means 11

Spectrum distribution analyzing means 15

Transmission mode detecting means 13

Tuning search control means 12

Error rate detecting means 14

User operation

EP 1 804 388 B1

# FIG.7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001285032 A
- JP 2004088162 A
- JP 2003234975 A